Europäisches Patentamt

European Patent Office

Office européen des brevets

(19)

(11) Veröffentlichungsnummer: **0 006 827**
**B1**

(12) **EUROPÄISCHE PATENTSCHRIFT**

(21) Anmeldenummer: **79810053.3**

(22) Anmeldetag: **20.06.79**

(51) Int. Cl.³: **B 23 P 1/00, B 23 P 15/28**

(54) Verfahren zur Bearbeitung von polykristallinem, synthetischem Diamant.

(30) Priorität: **29.06.78 CH 7077/78**

(43) Veröffentlichungstag der Anmeldung:
**09.01.80 Patentblatt 80/1**

(45) Bekanntmachung des Hinweises auf die Patenterteilung:
**28.01.81 Patentblatt 81/4**

(84) Benannte Vertragsstaaten:
**AT BE DE FR GB IT LU NL SE**

(56) Entgegenhaltungen:
**DE - C - 856 874**
**FR - A - 1 031 411**
**FR - A - 1 094 969**
**US - A - 2 552 582**

(73) Patentinhaber: **DIAMOND S.A.**
**Via dei Patrizi**
**CH-6616 Losone-Locarno (CH)**

(72) Erfinder: **Marazzi, Silvio**
**CH-6654 Cavigliano (CH)**

(74) Vertreter: **STEINER, Martin et al,**
**c/o AMMANN PATENTANWAELTE AG BERN**
**Schwarztorstrasse 31**
**CH-3001 Bern (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 827 B1

# Verfahren zur Bearbeitung von polykristallinem, synthetischem Diamant

Die vorliegende Erfindung betrifft ein Verfahren zur formgebenden Bearbeitng von polykristallinem, synthetischem Diamant. Es war bisher kaum möglich und wirtschaftlich praktisch ausgeschlossen, Teile, insbesondere Werkzeuge, aus synthetischem oder natürlichem Diamant mit beliebig geformten Kanten oder Flächen herzustellen. Die Erfindung geht von der Aufgabe aus, hier Abhilfe zu schaffen und auf wirtschaftlichem Wege praktisch beliebig geformte Diamantteile, insbesondere Werkzeuge herzustellen. Die Lösung besteht darin, dass die Bearbeitung mittels Elektroerosion, bei welcher ein Strom bei niedriger Spannung auf einer Bearbeitungsfläche in wesentlichen mit gleicher mittlerer Stromdichte zwischen dem Diamanten und einer Elektrode fliesst, erfolgt. Da synthetische, polykristalline Diamanten im allgemeinen Sinterkörper mit einem metallischen und somit elektrish leitenden Bindematerial sind, ist ein Bearbeitung durch Elektroerosion möglich, wobei an sich nur das Bindematerial abgebaut wird. Die erreichte Rauhigkeit von Schnittkanten an Werkzeugen leigt in einem Bereich von 0,1-0,04 $\mu$m, was zu einer sehr hohen Oberflächengüte, bzw. Formgenauigkeit führt. Dabei wird ein verhältnismässig rascher Materialabtrag erreicht, mit einer Eindringgeschwindigkeit der Elektrode in der Grössenordnung von 0,25 mm/min.

Die Erfindung wird im folgenden anhand einiger Ausführungsbeispiele von herzustellenden Teilen näher erläutert.

Fig. 1 und 2 zeigen ein Abrichtwerkzeug in Stirnansicht bzw. Draufsicht, wobei in Fig. 2 auch die Erosionselektrode angedeutet ist.

Fig. 3 und 4 zeigen eine Stirnansicht bzw. eine Draufsicht eines profilierten Zerspannungswerkzeugs, und

Fig. 5 und 6 zeigen einen Schnitt und eine Draufsicht auf ein Schnittwerkzeung mit profilierter Spanfläche.

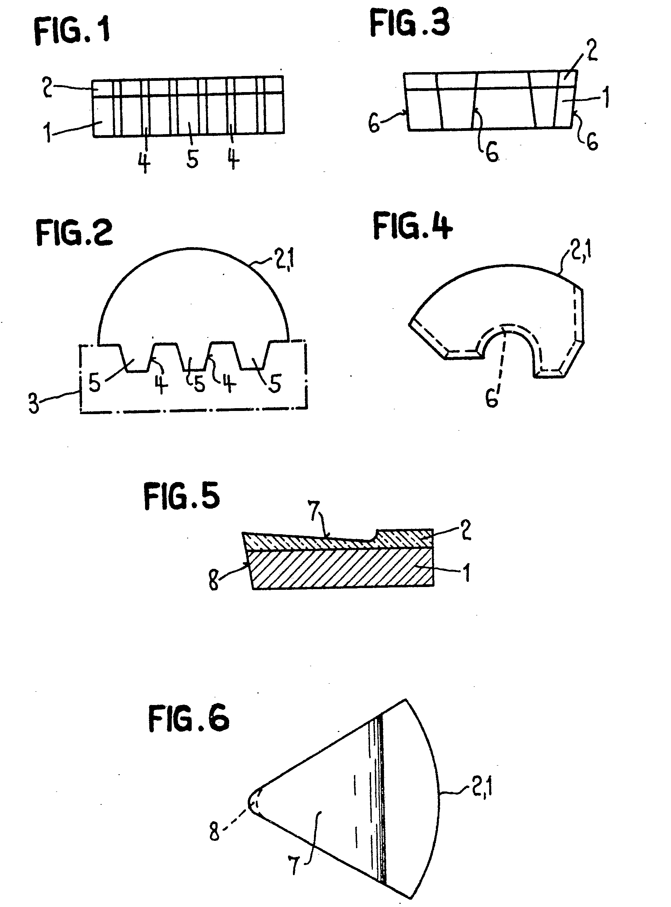

Das in Fig. 1 gezeigte Abrichtwerkzeug weist auf einem geeigneten, z.B. metallischen Träger 1 eine Schicht 2 polykristallinen, synthetischen Diamants auf. Die Herstellung eines Rohlings mit dem Träger 1 und der Schicht 2 ist an sich bekannt. Als Diamant kann z.B. eines der unter den Bezeichnungen "Compax" oder "Syndite" bekannten Materialien zur Anwendung gelangen. Die Vorderseite wird nun durchgehend, also in beiden Schichten 1 und 2 profiliert, indem mittels einer Erosionselektrode 3, die in Fig. 2 strichpunktiert angedeutet ist, Nuten 4 erodiert werden, so dass Zähne 5 entstehen. Die Elektrode 3 hat genau das Gegenprofil zu dem zu erzeugenden Profil.

Die Fig. 3 und 4 zeigen ein weiteres Werkzeug mit profilierter Zerspannungsfläche. In diesem Falle ist eine Elektrode oder sind gegebenenfalls mehrere miteinander oder teils nacheinander einzusetzende Elektroden vorzusehen, die nicht nur die Profilform an sich zu erodieren gestatten sondern auch die erforderlichen Freiwinkel bzw. Freiflächen 6 formen. Im übrigen sind entsprechende Teile gleich bezeichnet wie in Fig. 1 und 2.

Die Fig. 5 und 6 zeigen ein weiteres Zerspanungswerkzeug mit profilierter Spanfläche. In diesem Falle wird eine Erosionselektrode benützt, die von oben gegen die Diamantschicht 2 abgesenkt wird, um das Profil der Spanfläche bzw. die flache Ausnehmung 7 zu formen. In einem zweiten Arbeitsgang wäre dann auch die Freifläche 8 durch Erosion zu formen, falls sie nicht am Rohling geformt wird.

Wie soeben angedeutet, kann die Formgebung teils am Rohling bei der Herstellung der synthetischen, polykristallinen Diamantschicht 2 auf dem Träger 1 erfolgen. so könnten z.B. die Zähne 5 nach Fig. 1 und 2, die Profilform nach Fig. 4 und die Freifläche 8 nach Fig. 5 bereits bei der Herstellung des Rohlings vorgeformt werden, derart, dass nur noch die Nachbearbeitung auf das endgültige Mass bzw. die endgülte Form durch Elektroerosion zu erfolgen hätte.

Die dargestellten Beispiele beziehen sich alle auf Werkzeuge oder Werkzeugteile. Die Erfindung ist aber nicht auf diese Anwendung beschränkt. Auf entsprechende Weise können irgendwelche hochbeanspruchte Teile aller Art, wie Lagerteile, Verschleissteile und dergleichen, hergestellt werden.

## Patentansprüche

1. Verfahren zur formgebenden Bearbeitung von polykristallinem synthetischem Diamant, dadurch gekennzeichnet, dass die Bearbeitung mittels Elektroerosion, bei welcher ein Strom bei niedriger Spannung auf einer Bearbeitungsfläche im wesentlichen mit gleicher mittlerer Stromdichte zwisch dem Diamant und der Elektrode fliesst, erfolgt.

2. Verfahren nach Anspruch 1, dadurch gekennzeichnet, dass der Teil bei der Herstellung des Rohlings vorgeformt und durch Elektroerosion in die endgültige Form gebracht wird.

## Revendications

1. Procédé pour façonner des pièces en diamant synthétique polycristallin, caractérisé par le fait que le façonnage est effectué par électoérosion, opération dans laquelle, et sous basse tension, un courant coule entre ladite pièce en diamant et une électrode, la densité moyenne dudit courant sur la surface à travailler étant substantiellement uniforme.

2. Procédé selon la revendication 1, caractérisé par le fait que lesdites pièces sont préformées lors de la fabrication des ébauches et qu'elles obtiennent leur forme définitive par électroérosion.

## Claims

1. A method for shaping processing of polycrystalline, synthetic diamond, characterized in that the processing is performed by spark erosion, whereby a current at low voltage flows on a surface to be worked between the diamond and an electrode with essentially a constant mean current density.

2. A method according to claim 1, characterized in that the part to be formed is preformed during the production of the blank and brought by spark erosion into the definitive shape.

FIG.1

FIG.3

FIG.2

FIG.4

FIG.5

FIG.6